Europäisches Patentamt

European Patent Office

Office européen des brevets

(19)

(11) Numéro de publication : **0 143 029**
**B1**

(12) **FASCICULE DE BREVET EUROPÉEN**

(45) Date de publication du fascicule du brevet :
20.09.89

(51) Int. Cl.⁴ : **H 02 K 37/10**, H 02 K 41/03,
H 02 P 8/00

(21) Numéro de dépôt : **84402058.6**

(22) Date de dépôt : **12.10.84**

(54) Moteur pas-à-pas du type hybride polyphasé et son dispositif de commande.

(30) Priorité : 16.11.83 FR 8318187

(43) Date de publication de la demande :
29.05.85 Bulletin 85/22

(45) Mention de la délivrance du brevet :
20.09.89 Bulletin 89/38

(84) Etats contractants désignés :
CH DE FR GB IT LI NL SE

(56) Documents cités :
DE--A-- 2 732 364
FR--A-- 1 250 276
FR--A-- 2 102 530
FR--A-- 2 439 502
GB--A-- 2 085 666
US--A-- 3 343 014
US--A-- 3 671 841
US--A-- 4 306 164
PATENTS ABSTRACTS OF JAPAN, vol. 6, no. 182 (E-131) [1060], 18.09.1982; & JP - A - 57 95 174 (TOKYO SHIBAURA DENKI K.K.) 12.06.1982
PATENTS ABSTRACTS OF JAPAN, vol. 2, no. 104, 26 août 1978, page 5463 E 78; & JP - A - 53 70 313 (FUJITSU K.K.) 22.06.1978
IBM TECHNICAL DISCLOSURE BULLETIN, vol. 6, no. 9, février 1974, pages 19,20, New York, US; L.J. THOMPSON: "Linear incremental motor"
PROCEEDINGS PART 2 - INTERNATIONAL CONFERENCE ON ELECTRICAL MACHINES, Lausanne, Suisse, 18-21 septembre 1984, pages 566-569; H. YAMADA et al.: "Application of linear pulse motor to artificial heart actuator"

(73) Titulaire : **LA TELEMECANIQUE ELECTRIQUE**
**33 bis, avenue du Maréchal Joffre**
**F-92000 Nanterre (FR)**

(72) Inventeur : **Koehler, Gérard**
**46 rue de Sèvres**
**F-92410 Ville d'Avray (FR)**

(74) Mandataire : **Bouju, André**
**Cabinet Bouju 38 avenue de la Grande Armée**
**F-75017 Paris (FR)**

## Description

La présente invention concerne un moteur pas-à-pas du type hybride polyphasé, comprenant un élément primaire tel qu'un stator qui comporte un bobinage par phase, un élément secondaire susceptible de se déplacer par rapport à l'élément primaire et un aimant permanent dont les faces polaires sont munies de deux pièces polaires dont les extrémités définissent des entrefers avec le reste du circuit magnétique, de façon que pour certaines positions relatives des éléments primaire et secondaire, on réalise un circuit magnétique fermé comprenant l'aimant permanent et deux entrefers fermés.

On sait que parmi les moteurs électriques rotatifs, il existe trois principaux types de moteur pas-à-pas :

un premier type à réluctance ;

un second type à aimant permanent ; et

un troisième type hybride, c'est-à-dire à réluctance et aimant permanent.

La Revue Générale de l'Electricité, tome 91, volume n° 3, mars 1981, page 176 et suivantes, précise les caractéristiques électriques et constructives de ces moteurs.

Les moteurs à réluctance présentent l'inconvénient de ne pas posséder de couple de maintien résiduel (ou de détente) en l'absence d'excitation, de sorte que lors de leur arrêt, on risque de perdre des pas polaires. Les deux autres types de moteur présentent des couples de maintien qui ne dépassent pas 10 % environ du couple statique avec excitation. Or il serait intéressant d'augmenter ce couple de maintien dans de nombreuses applications. Toutefois, si ce couple augmente trop, il en résulte en général un effort plus grand demandé au couple moteur, ce qui entraîne une perte de couple et réduit l'accélération du moteur.

On sait que la rapidité d'exécution des pas des moteurs du genre ci-dessus est limitée en particulier par la self des bobinages qu'on ne peut désexciter rapidement sans provoquer des surtensions dangereuses pour le dispositif électronique de commutation de ces moteurs, tout au moins si des précautions onéreuses ne sont pas prises. Il est donc intéressant de pouvoir diminuer les variations d'énergie électromagnétique dans le stator bobiné lors de la coupure de l'alimentation électrique de ce dernier.

Par ailleurs, on sait que l'introduction d'un aimant permanent dans un moteur pas-à-pas du type hybride a pu apporter une amélioration des performances de celui-ci. Il est donc intéressant de poursuivre cette amélioration en augmentant par exemple le volume de la matière aimantée, en rapprochant les entrefers de l'aimant et en évitant les pertes de flux par de longs circuits de retour par des culasses, sans toutefois augmenter l'inertie du rotor.

Dans un autre domaine, le bobinage des encoches ménagées dans le stator des moteurs pas-à-pas est onéreux, ainsi que les matériaux magnétiques utilisés pour le stator, et ces moteurs exigent une importante main-d'oeuvre d'assemblage.

Le but de la présente invention est de remédier aux inconvénients des réalisations connues en apportant des perfectionnements aux moteurs rotatifs pas-à-pas du type hybride polyphasés, ainsi qu'aux moteurs linéaires pas-à-pas.

Le moteur pas-à-pas du type hybride polyphasé visé par l'invention comprend un élément primaire tel qu'un stator qui comporte un bobinage par phase, un élément secondaire susceptible de se déplacer par rapport à l'élément primaire et un aimant permanent dont les faces polaires sont munies de deux pièces polaires dont les extrémités définissent des entrefers avec le reste du circuit magnétique, de façon que pour certaines positions relatives des éléments primaire et secondaire, on réalise un circuit magnétique fermé comprenant l'aimant permanent et deux entrefers fermés.

Suivant l'invention, ce moteur est caractérisé en ce qu'il comporte par phase un deuxième aimant permanent également muni, sur ses faces polaires, de deux pièces polaires dont des extrémités définissent les entrefers avec les extrémités des pièces polaires du premier aimant permanent de façon à avoir un aimant permanent dans l'élément primaire et un autre dans l'élément secondaire, chaque entrefer étant ainsi encadré par deux aimants permanents, l'un mobile et l'autre fixe, l'un en amont de la circulation du flux et l'autre en aval, et en ce que ce deuxième aimant permanent est orienté de façon à ce que le champ du bobinage de la phase correspondante soit perpendiculaire à la direction de son aimantation et dirigé vers l'une ou l'autre des extrémités de chacune de ses pièces polaires définissant les entrefers, de manière à créer un dispositif aiguilleur de flux.

Selon une version avantageuse de l'invention, le premier aimant permanent est également orienté de façon que le champ du bobinage de la phase correspondante soit perpendiculaire à la direction de son aimantation et dirigé vers l'une ou l'autre des extrémités de chacune de ses pièces polaires définissant des entrefers, de manière à ce que le moteur comporte deux dispositifs aiguilleurs de flux, en série, l'un dans l'élément primaire et l'autre dans l'élément secondaire, définissant quatre rangées d'entrefers.

Cette disposition permet d'améliorer les performances du moteur pas-à-pas et en particulier d'augmenter notablement son couple de maintien résiduel.

Selon une version préférée de l'invention dans laquelle l'élément secondaire est un rotor tournant autour d'un arbre, le bobinage a la forme d'un tore de section sensiblement circulaire, centré sur l'arbre du moteur et les pièces polaires fixes ont la forme générale d'un tore qui enveloppe le bobinage à la manière d'un pneumatique par rapport à une chambre à air, tandis que les pièces polaires mobiles ont, par rapport au bobinage et à l'arbre, une forme analogue à celle qu'a une jante d'une roue équipée d'un pneumatique par rapport à sa chambre à air et à l'axe de la roue.

Dans cette réalisation, l'ensemble du bobinage est entouré par du fer et présente ainsi une efficacité optimale, nettement supérieure à celle d'un bobinage classique muni d'encoches.

De plus, dans cette version, grâce à la section sensiblement circulaire du bobinage et à la forme enveloppante des pièces polaires, le fer de celles-ci se trouve le plus près possible du cuivre du bobinage, ce qui minimise les réluctances et les fuites magnétiques.

Par ailleurs, les aimants du stator et du rotor sont le plus proche possible des entrefers définis par les pièces polaires, ce qui augmente leur efficacité.

La présente invention n'est cependant pas limitée aux moteurs rotatifs pas-à-pas, mais elle s'applique aussi aux moteurs linéaires pas-à-pas, dans lesquels un des éléments a une longueur plus courte que l'autre.

Selon un autre aspect de l'invention, un premier dispositif pour commander le moteur pas-à-pas hybride conforme à l'invention, comprenant un circuit électronique adapté pour envoyer des impulsions aux différentes phases du moteur, est caractérisé en ce que ce circuit électronique comprend des moyens pour qu'après un positionnement par l'excitation d'une certaine phase dans un sens déterminé, une excitation ultérieure d'une autre phase est accompagnée d'une excitation inverse de la phase précédemment excitée, avec une amplitude et une durée inférieures à celles de ladite précédente excitation, de façon à obtenir une impulsion de déverrouillage du couple de maintien résiduel du moteur.

Ce dispositif permet notamment d'augmenter le couple disponible sur l'arbre du moteur et la fréquence maximum de fonctionnement du moteur.

Un deuxième dispositif de commande permet d'alimenter directement un moteur à 3 phases à partir d'un secteur triphasé.

D'autres particularités et avantages de l'invention apparaîtront encore dans la description ci-après.

Aux dessins annexés, donnés à titre d'exemples non limitatifs :

la figure 1 est une vue en coupe suivant le dièdre I-I de la figure 2, d'un moteur pas-à-pas rotatif conforme à l'invention ;

la figure 2 est une vue en bout du moteur selon la figure 1, le porte-roulement de l'arbre de ce moteur ayant été enlevé;

la figure 3 est une vue en coupe suivant le plan III-III de la figure 1 ;

la figure 4 est une vue en coupe axiale du quart d'une autre version d'un moteur rotatif conforme à l'invention ;

la figure 5 est une demi-coupe diamétrale de ce moteur ;

la figure 6 est une vue en coupe axiale d'une troisième version d'un moteur rotatif conforme à l'invention ;

la figure 7 est une vue en coupe diamétrale de ce moteur ;

la figure 8 est une vue en coupe d'un moteur pas-à-pas linéaire conforme à l'invention, suivant la ligne VIII de la figure 9 ;

la figure 9 est une vue de dessus de ce moteur ;

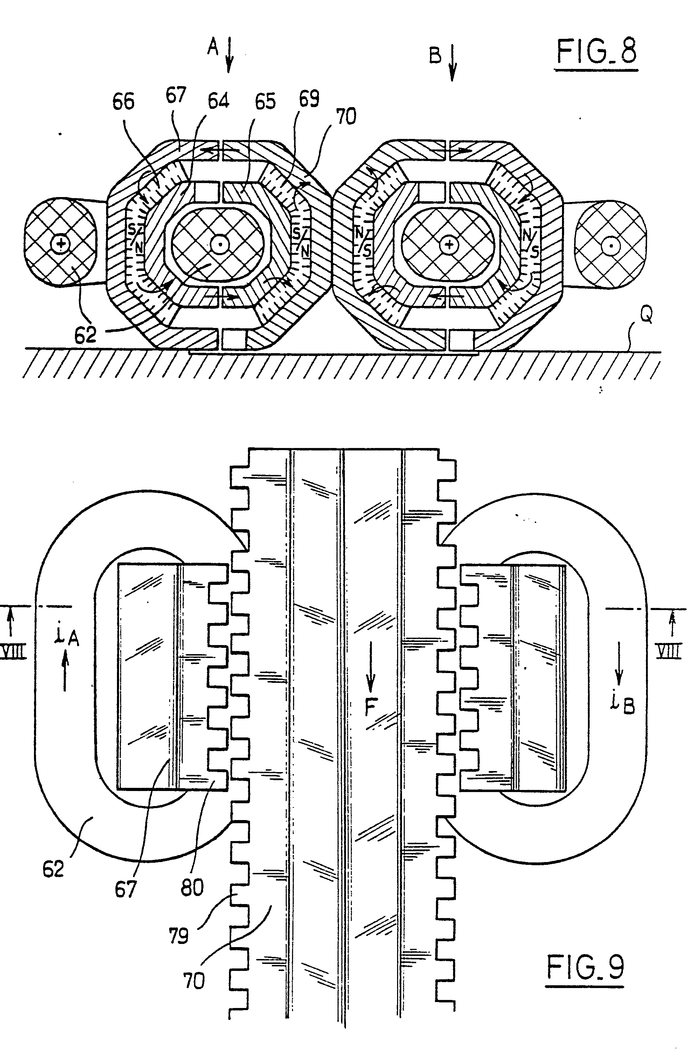

la figure 8A est une vue en perspective éclatée d'un autre moteur linéaire conforme à l'invention.

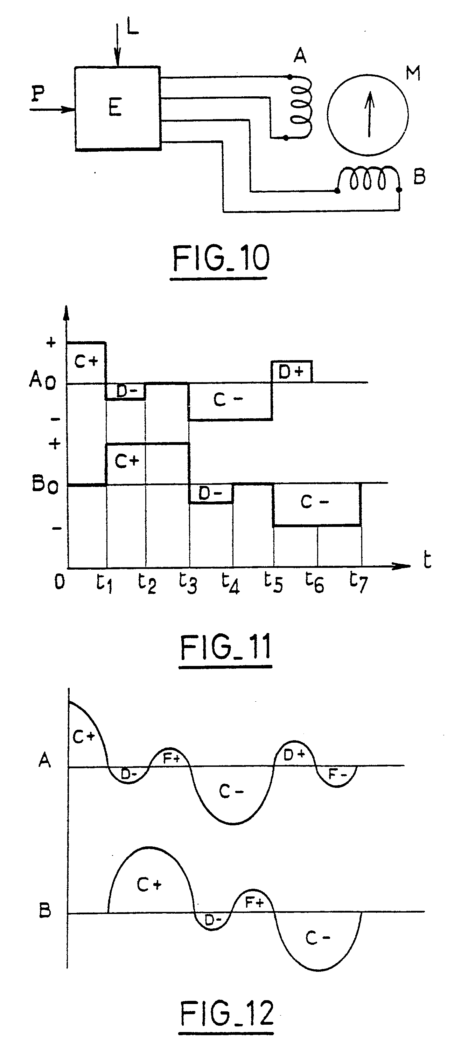

la figure 10 est le schéma électrique d'un premier dispositif de commande d'un moteur conforme l'invention ;

les figures 11 et 12 sont des diagrammes illustrant le fonctionnement de ce dispositif de commande ;

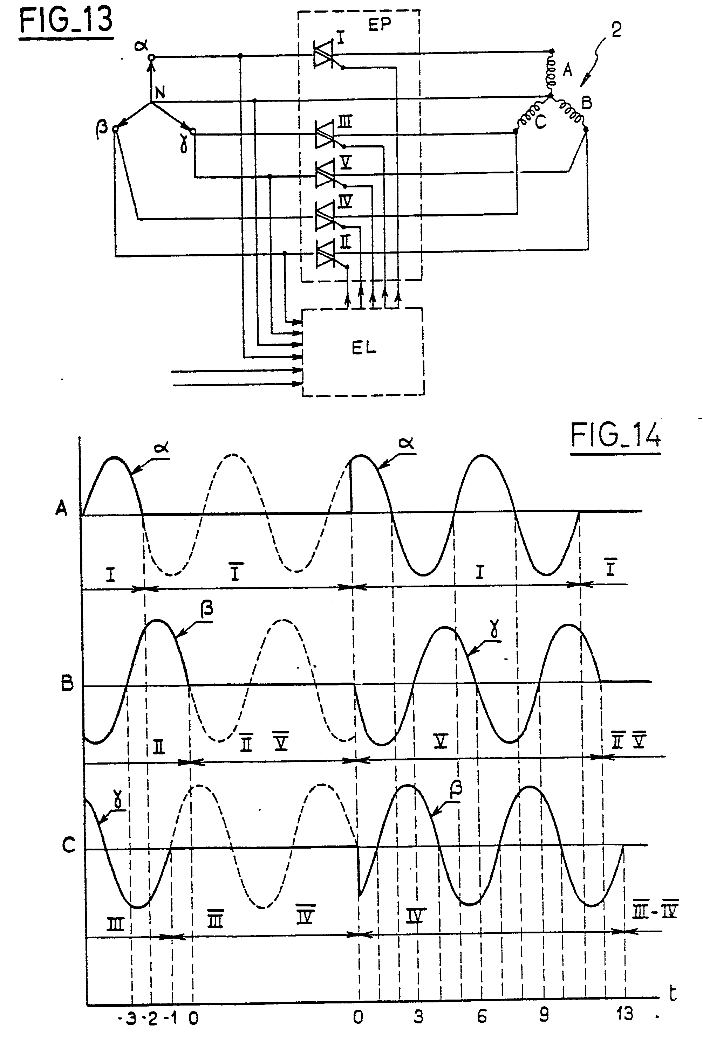

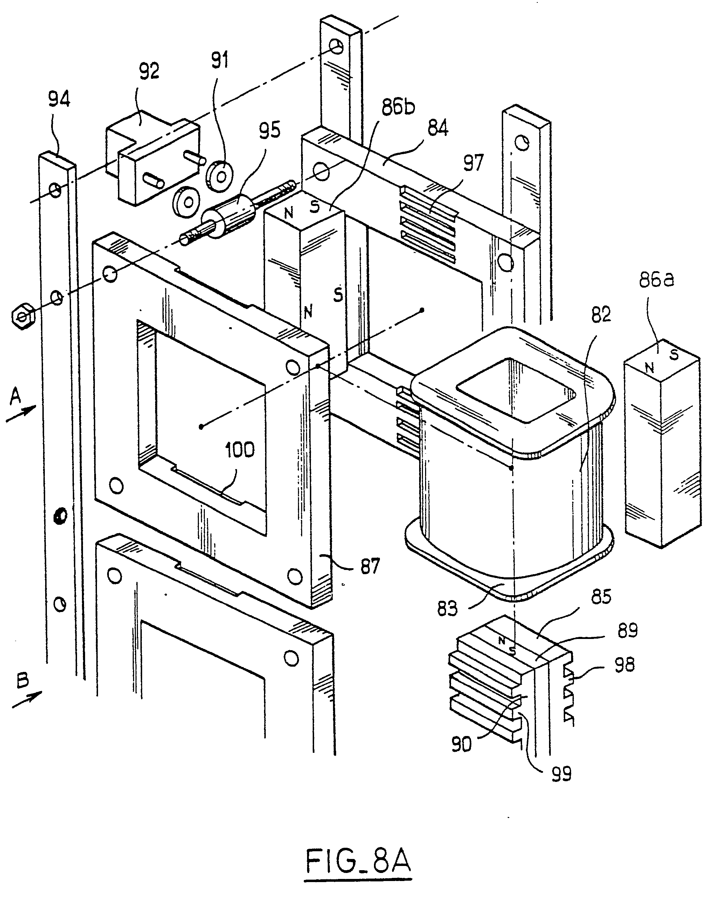

la figure 13 est un schéma d'un deuxième dispositif de commande ; et

la figure 14 est un diagramme illustrant le fonctionnement de ce deuxième dispositif de commande.

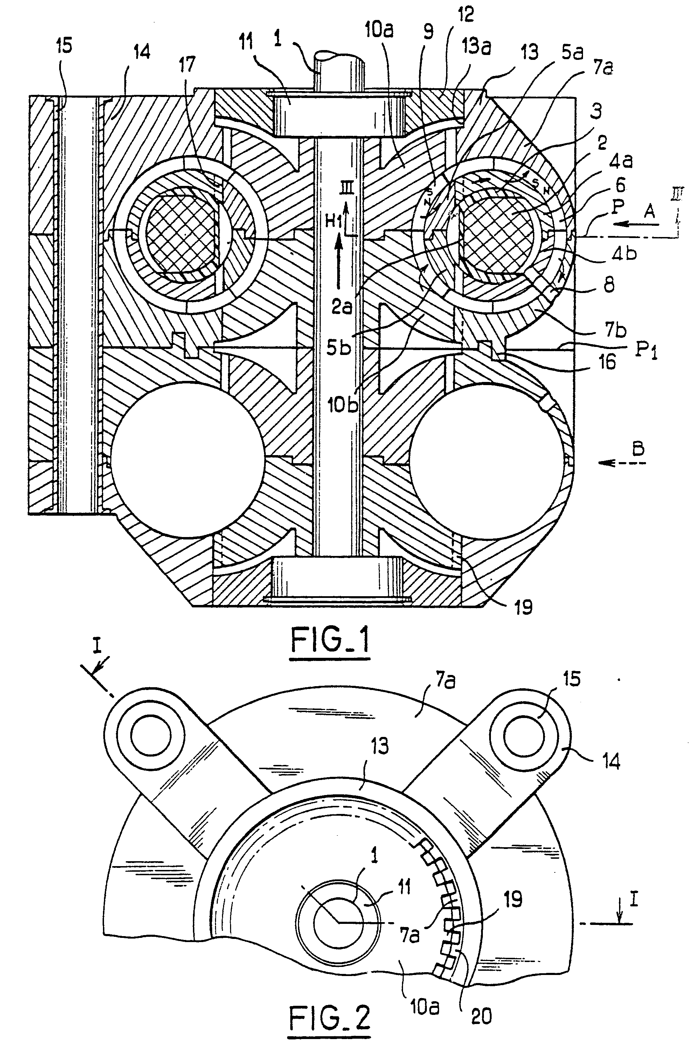

Le moteur rotatif pas-à-pas du type hybride représenté sur les figures 1 à 3 comporte deux phases identiques A et B montées sur le même arbre 1 et décalées angulairement l'une par rapport à l'autre d'une manière classique. Seule la phase A représentée sur la partie supérieure de la figure 1 sera décrite.

Cette phase A du moteur comprend un bobinage 2 en forme de tore de section sensiblement circulaire, centré sur l'axe de l'arbre 1. Ce bobinage 2 est protégé extérieurement par une carcasse 3 en matière électriquement isolante.

Deux demi-coquilles symétriques 4a, 4b en matériau magnétique sont emboîtées l'une sur l'autre autour du bobinage 2 suivant le plan diamétral P de celui-ci.

Ces deux demi-coquilles 4a, 4b en position d'assemblage forment un tore ouvert vers l'arbre 1, qui recouvre le bobinage 2 à la manière d'un pneumatique par rapport à une chambre à air.

Deux autres demi-coquilles symétriques 5a et 5b emboîtées l'une dans l'autre suivant le plan diamétral P sont disposées dans la partie ouverte du tore formé par les deux demi-coquilles 4a, 4b et recouvrent ainsi la partie 2a du bobinage 2 qui est dirigée vers l'arbre 1. La surface extérieure des demi-coquilles 5a, 5b est située exactement dans le prolongement des demi-coquilles 4a, 4b de sorte que l'ensemble de ces demi-coquilles forme un tore centré sur l'arbre 1. La disposition des demi-coquilles 5a, 5b par rapport aux demi-coquilles 4a, 4b est équivalente à celle d'une jante par rapport à un pneumatique.

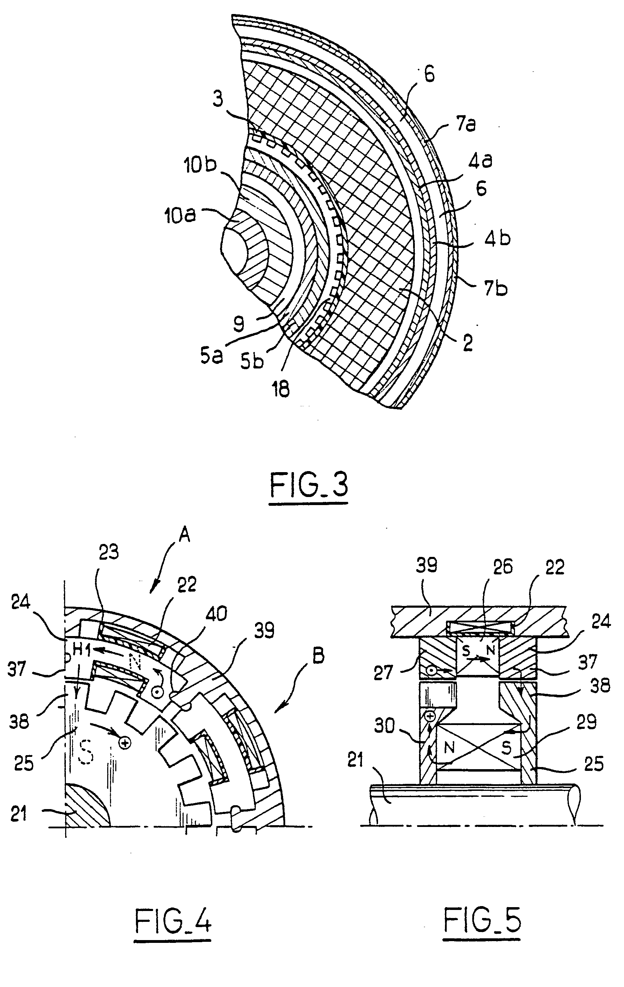

Par ailleurs, on voit sur les figures 1 et 3, que l'ensemble primaire formé par le bobinage 2, la carcasse 3, les demi-coquilles 4a et 4b qui sont liées au bobinage 2 par la carcasse 3 est fixe et fait partie du stator du moteur.

Par contre, l'ensemble secondaire formé par les demi-coquilles 5a, 5b est rendu solidaire de l'arbre 1 et est donc mobile en rotation avec cet arbre 1 et fait donc partie du rotor du moteur.

Les extrémités en regard des demi-coquilles 4a et 5a d'une part et des demi-coquilles 4b et 5b d'autre part, sont à égale distance de l'arbre 1 et sont munies de dents telles que 17-18 (voir figures 1 et 3).

La structure que l'on vient de décrire est sensiblement conforme à celle décrite dans le brevet français 2 459 575.

Selon une caractéristique importante de la présente invention, on prévoit d'ajouter simultanément un aimant permanent à l'élément primaire fixe et un autre aimant permanent à l'élément secondaire.

On voit sur les figures 1 et 3, qu'un aimant permanent fixe 6 recouvre la surface extérieure des demi-coquilles 4a, 4b du stator. Cet aimant permanent 6 de section en arc de cercle peut être obtenu à partir d'une bande de caoutchouc magnétique dont la longueur correspond au périmètre extérieur des demi-coquilles 4a, 4b et dont les bords sont entaillés en coins de façon à pouvoir être plaqués sur la surface gauche des demi-coquilles. Cet aimant permanent 6 est aimanté vers le centre du bobinage 2.

Deux autres demi-coquilles 7a, 7b dites statoriques extérieures par opposition aux demi-coquilles 4a, 4b dites statoriques intérieures sont emboîtées l'une sur l'autre également suivant le plan diamétral P et recouvrent l'ensemble formé par le bobinage 2, la carcasse 3, les demi-coquilles 4a, 4b et l'aimant permanent 6, ce dernier reliant ces demi-coquilles 7a, 7b aux demi-coquilles 4a, 4b. Tout cet ensemble constitue le stator de la phase A du moteur.

Un trou 8 pratiqué à travers les demi-coquilles 7b et 4b et à travers l'aimant 6 permet de faire sortir du moteur les extrémités du fil conducteur (non représenté) du bobinage 2.

Conformément à l'invention, un aimant permanent 9 est également disposé sur la face dirigée vers l'arbre 1 des demi-coquilles 5a, 5b dites rotoriques. Cet aimant 9 est également obtenu à partir d'une bande de caoutchouc magnétique et est aimanté comme l'aimant 6, vers le centre du bobinage 2.

Deux autres demi-coquilles 10a, 10b dites rotoriques intérieures par opposition aux demi-coquilles rotoriques extérieures 5a, 5b sont emboîtées l'une sur l'autre également suivant le plan diamétral P et recouvrent l'ensemble constitué par l'aimant 9 et les demi-coquilles 5a, 5b, l'aimant 9 reliant ces dernières aux demi-coquilles 10a, 10b.

Les demi-coquilles 10a, 10b sont traversées par un alésage central dans lequel est emmanché l'arbre 1 du moteur.

Cet arbre 1 est monté dans des roulements 11 dont la périphérie est emboîtée dans une bague 12 en matière non magnétique qui est elle-même encastrée dans un évidement 13a pratiqué dans une protubérance axiale et annulaire 13 ménagée sur la demi-coquille 7a.

On voit d'autre part sur la figure 2, que les demi-coquilles 7a et 7b comportent quatre pattes 14 inscrites dans le carré circonscrit au diamètre du stator qui présentent chacune un alésage parallèle à l'arbre 1 dans lequel est engagé un rivet creux 15 permettant l'assemblage axial des différentes demi-coquilles et des deux phases A et B du moteur et servant également à la fixation de celui-ci.

Dans l'exemple représenté (voir figure 1), les deux phases A et B sont emboîtées l'une sur l'autre suivant un plan P₁. Cet assemblage comporte un pont cylindrique 16 faisant partie de la demi-coquille 7b qui facilite cet assemblage. Ce pont cylindrique 16 comporte avantageusement des repères servant à assurer l'indexage angulaire des deux phases A et B tout en permettant d'obtenir une bonne étanchéité de cet assemblage, ce qui met les entrefers à l'abri de la poussière.

Sur la figure 2 qui montre le dessus du moteur après enlèvement de la bague 12 portant le roulement 11, on voit que l'extrémité de la demi-coquille statorique extérieure 7a dirigée vers l'arbre 1 comporte des dents 20.

De même, l'extrémité de la demi-coquille rotorique 10a en regard de l'extrémité de la demi-coquille statorique 7a, comporte des dents 19. Bien entendu, de telles dents 19, 20 sont également ménagées sur les extrémités des demi-coquilles 7b et 10b. Ces dents 19 et 20 ont des dimensions identiques.

La surface cylindrique sur laquelle sont placés les entrefers compris entre les dents 17, 18 et 19, 20, a de préférence un diamètre légèrement inférieur au diamètre intérieur de la carcasse 3 de la bobine 2, de façon à pouvoir assembler séparément le stator et le rotor.

Le fonctionnement du moteur que l'on vient de décrire est le suivant :

Lorsqu'on alimente le bobinage 2 dans un sens donné, on provoque en son centre un champ de direction H1, par exemple dirigé vers le haut. Naturellement, ce champ tourne autour des conducteurs et à l'extérieur des conducteurs, il est dirigé vers le bas.

Lorsque l'aimant permanent 9 a un pôle N adjacent aux demi-coquilles 5a, 5b, le flux de cet aimant sort uniquement par les dents 18, de la demi-coquille 5a située vers le haut de la figure 1 (voir flèches). De là, ce flux passe aux dents 17 de la demi-coquille du haut 4a en provoquant une partie du couple moteur recherché. L'aimant permanent 6 a alors son pôle S dirigé vers les coquilles 4a, 4b. Le flux va donc traverser l'aimant permanent 6 pour ressortir uniquement par les dents 20 de la demi-coquille du bas 7b, d'où il rejoint par les dents 19, la demi-coquille du bas 10b en fournissant l'autre partie du couple moteur recherché, pour retourner à l'aimant permanent 9.

Après excitation inverse de la bobine 2, le flux magnétique passe successivement dans les demi-coquilles 5b, 4b, dans l'aimant 6, dans les demi-coquilles 7a, 10a et dans l'aimant 9, en tournant dans le sens inverse du précédent.

Bien entendu, comme indiqué sur la figure 1, l'épaisseur des demi-coquilles augmente au fur et à mesure qu'on se rapproche de l'arbre 1, de façon à maintenir dans l'espace une section de fer sensiblement constante.

On constate qu'en tout point de chaque aimant 6, 9, le champ du bobinage 2 est perpendiculaire à la direction d'aimantation de cet aimant et dirigé vers l'une ou l'autre des extrémités de chaque pièce polaire (4a, 4b, 5a, 5b, 7a, 7b, 10a, 10b) définissant des entrefers.

Cette disposition provoque par conséquent un aiguillage du flux venant de l'une ou l'autre des entrées S des aimants, pour sortir par l'une ou l'autre des sorties N diamétralement opposées à l'entrée.

Dans la première réalisation suivant l'invention décrite ci-dessus, il existe par conséquent deux aiguilleurs de flux en série, l'un dans le stator et l'autre dans le rotor, définissant quatre rangées d'entrefer par phase. Ces aiguilleurs de flux sont commandés à partir du même bobinage 2. Chaque entrefer défini par les pièces polaires est encadré par deux aimants permanents 6, 9, l'un en amont et l'autre en aval de la circulation du flux, l'un appartenant au stator et l'autre au rotor.

Par ailleurs, toutes les parties du bobinage 2 sont entourées par du fer et sont donc actives, alors qu'avec un bobinage classique muni d'encoches, seule la partie dans l'encoche est active, tandis que les liaisons extérieures ou chignons latéraux non seulement ne servent à rien, mais encore introduisent des résistances néfastes.

De plus, grâce à la section sensiblement circulaire du bobinage 2 et des demi-coquilles, le fer se trouve le plus près possible du cuivre de ce bobinage, en minimisant les réluctances et les fuites.

Enfin, les aimants 6 et 9 sont proches des entrefers définis par les pièces polaires, ce qui augmente leur efficacité.

Les sections de fer peuvent être plus importantes que dans un moteur rotatif classique équivalent et les épaisseurs de fer sont, sur la majeure partie du trajet, plus faibles, ce qui minimise les pertes-fer. Du reste, dans une portion donnée de fer, les flux ne font que s'annuler au lieu de changer de sens, ce qui diminue beaucoup l'aire d'un cycle d'hystérésis. pour diminuer encore ces pertes, au lieu d'utiliser de la tôle au silicium onéreuse pour réaliser les demi-coquilles, il est possible de réaliser celles-ci par frittage d'une poudre de fer ayant une résistance assez élevée.

Toutes ces caractéristiques contribuent à améliorer les performances du moteur pas-à-pas conforme à l'invention, ainsi qu'à augmenter le couple de maintien résiduel (ou de détente) de celui-ci.

Par ailleurs, dans le moteur selon l'invention, la coupure rapide d'un bobinage 2 se fait avec moins de surtension, du fait qu'il subsiste le flux des aimants 6, 9 au moment de la coupure.

En ce qui concerne les coûts de fabrication, s'il est nécessaire d'utiliser des outillages assez onéreux, la main-d'oeuvre d'assemblage est cependant réduite et la réalisation du bobinage 2 est grandement simplifiée.

Sans sortir du domaine de l'invention, il aurait bien entendu été possible d'apporter des modifications telles que la localisation des entrefers dans le plan diamétral P du bobinage 2 (mais alors avec des composantes de force axiales) ou telles qu'une forme elliptique des demi-coquilles.

Au lieu de disposer d'un aiguilleur de flux au rotor et un autre au stator du moteur rotatif, on peut se contenter d'un seul aiguilleur de flux au stator et un aimant permanent au rotor, avec une aimantation axiale qui n'est pas soumise à l'influence d'un bobinage. On peut de la sorte retrouver les dispositions constructives principales des moteurs pas-à-pas hybrides classiques.

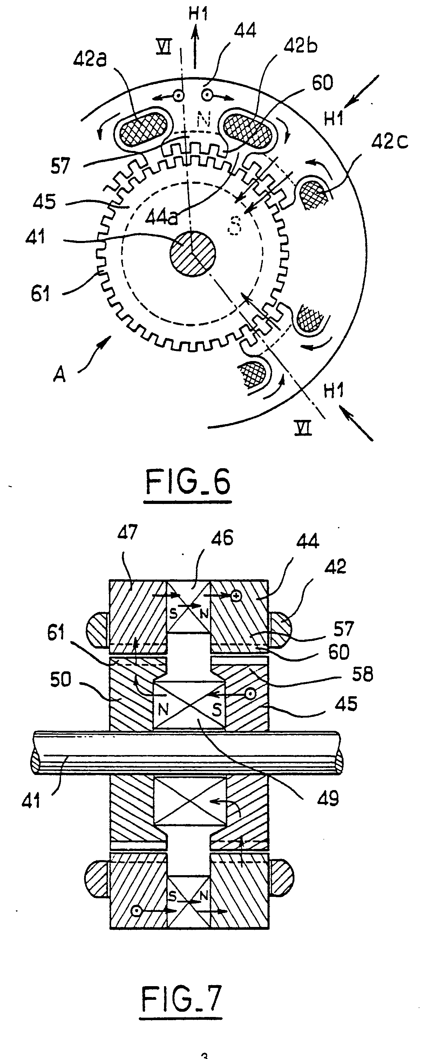

Une telle disposition est représentée sur les figures 4 et 5, où l'on a ajouté une vingtaine aux repères homologues précédents.

Dans la réalisation des figures 4 et 5, les deux phases A et B du moteur sont imbriquées sur une même circonférence centrée sur l'arbre 21. La phase A comporte un bobinage 22 bobiné sur une carcasse de bobine 23 dont l'axe est perpendiculaire à l'arbre 21 et situé à une distance constante de ce dernier. Deux pièces polaires 24 et 27 sont appliquées sur les faces polaires d'un aimant plat 26.

Ces pièces polaires 24, 27 sont situées dans des plans perpendiculaires à l'arbre 21. L'âme de la carcasse de bobine 23 entoure la partie centrale de l'assemblage des pièces polaires 24 et 27 et de l'aimant 26.

Le champ H1 du bobinage 22 est donc perpendiculaire à l'axe d'aimantation et dirigé vers les extrémités des pièces polaires 24 et 27. L'ensemble comprenant la bobine 22, les pièces polaires 24 et 27 et l'aimant 26 constitue ce qui a été appelé précédemment un aiguilleur de flux. Les entrées et sorties de cet aiguilleur de flux sont constituées par les extrémités des pièces polaires 24 et 27 émergeant de la carcasse 23 du bobinage 22. Ces extrémités sont tournées vers l'arbre 21 pour constituer des dents statoriques 37.

Le rotor comprend également un aimant permanent 29 qui est donc mobile. Suivant une disposition classique, cet aimant 29 a une forme en anneau, étant glissé sur l'arbre 21. Cet aimant 29 a un axe d'aimantation parallèle à l'arbre 21 et il est muni sur ses faces polaires de deux pièces polaires 25 et 30 qui sont donc perpendiculaires à l'arbre 21. Ces pièces polaires 25 et 30 sont munies sur leur périphérie de dents rotoriques 38 qui définissent des entrefers avec les dents statoriques 37.

Dans l'exemple de la figure 4, il existe 18 dents rotoriques 38 sur une pièce polaire rotorique 25 ou 30. Pour la clarté de la figure 4, la pièce polaire 30 n'a pas été représentée. Bien entendu, le nombre de dents 38 pourrait être plus élevé.

On voit aussi que l'aiguilleur de flux constitué par le bobinage 22, sa carcasse 23 et les pièces polaires 24 et 27 couvre un arc s'étendant sur deux pas de dents 38 et qu'il est suivi d'un deuxième aiguilleur de flux décalé d'un quart de pas de dents 38. Ce deuxième aiguilleur de flux appartient à la phase B. Sur toute la périphérie du moteur, il existe donc 4 aiguilleurs de flux pour chaque phase, qui peuvent être connectés en série. Ces aiguilleurs de flux sont maintenus en position par une carcasse amagnétique 39 qui protège également les bobinages 22. Le positionnement précis des aiguilleurs de flux peut par exemple être fait par des encoches, des circuits se glissant dans des tenons 40 parallèles à l'arbre 21. Des flasques munis de roulements (non représentés) sont ajoutés d'une manière conventionnelle.

Le fonctionnement du moteur que l'on vient de décrire est le suivant :

Quand la bobine 22 est alimentée de façon à produire un champ H1, par exemple dirigé vers la gauche de la figure 4, le flux de l'aimant permanent 26 sort par l'extrémité gauche de la pièce polaire 24 qui est en contact avec la face N de l'aimant. De la dent 37, correspondant à cette extrémité du stator, il passe à la dent 38 de la pièce polaire 25 du rotor en provoquant le couple recherché. A partir de cette position, le flux est propulsé par l'aimant permanent mobile 29 vers la pièce polaire 30, en effectuant dans ce trajet un décalage angulaire correspondant à un pas et demi des dents 38, de façon à se trouver en face d'une dent 37 de la pièce polaire 27, pour retourner à l'aimant 26. Bien entendu, le flux de l'aimant mobile 29 se referme également par trois autres chemins en parallèle avec le précédent, correspondant dans le cas présent aux trois autres bobines de la phase A.

Comme dans le cas de la réalisation selon les figures 1 à 3, chaque entrefer est encadré, en amont et en aval de la circulation du flux, par deux aimants permanents 26 et 29, l'un fixe faisant partie du stator et l'autre mobile faisant partie du rotor. Cependant, dans le cas des figures 4 et 5, le flux de l'aimant permanent 29 n'est plus aiguillé par le bobinage 22. Cela revient à dire qu'on n'empêche pas ce flux de passer par des dents 37, qu'on voudrait mettre hors service, mais qu'on lui offre simplement un passage plus favorable par une autre dent derrière laquelle il y a un aimant permanent de polarité opposée. Il en résulte une moins grande efficacité de la commutation des flux par les bobinages 22 que dans le cas des figures 1 à 3. De plus, le trajet du flux dans le fer n'est pas circulaire et présente donc plus de réluctance et de fuites. Enfin, ce trajet du flux n'entoure que la partie intérieure du bobinage 22.

En contrepartie, le rotor constitué par les parties 25, 29 et 30 peut être utilisé alternativement pour la phase A puis pour la phase B, d'où il résulte une plus grande compacité. Par ailleurs, le bobinage est toujours facile à réaliser.

On peut aussi envisager un troisième mode de réalisation, se déduisant du précédent, mais se rapprochant encore plus des dispositions constructives des moteurs pas-à-pas hybrides classiques. Ce mode de réalisation est décrit ci-après, en référence aux figures 6 et 7. Sur ces figures, les éléments homologues de ceux de réalisation selon les figures 4 et 5 sont affectés des mêmes références augmentées de 20. Toutefois, à titre d'exemple, suivant une disposition classique, les pièces polaires mobiles 45 et 50 sont munies sur leur périphérie de dents 61 dont le pas est plus petit que celui des extrémités 57 des pièces polaires fixes 44 et 47, et ces extrémités 57 sont également munies de dents 60 ayant sensiblement le même pas que les dents 61. Une telle disposition aurait aussi pu être appliquée la figure 4. De plus, un bobinage tel que 42a, 42b, 42c, engendre en son centre un champ H1 passant par l'arbre 41 du moteur.

Par ailleurs, toute la circonférence du stator est occupée par la phase A et les pièces polaires statoriques des différents bobinages 42a, 42b sont réunies les unes aux autres pour former deux couronnes 44 et 47. Ces couronnes ont des encoches 44a ouvertes vers l'intérieur, dans lesquelles sont disposés d'une manière classique les conducteurs 42a, 42b, 42c... de façon à engendrer des champs H1 radiaux alternativement dirigés vers l'arbre 21 ou dirigés à l'opposé de cet arbre.

Les aimants fixes 46 peuvent aussi être réunis les uns aux autres pour former une couronne 46 de même forme, à l'exception des dents 60, que celles des couronnes 44 et 47. L'aimant 46 peut facilement être découpé dans une plaque de caoutchouc magnétique. Le fonctionnement du moteur selon les figures 6 et 7 se déduit de celui du moteur des figures 4 et 5. Il suffit de considérer que l'aiguilleur du flux 22, 24, 27 de la réalisation des figures 4 et 5 a été tourné de 90° pour que le champ H1 engendré dans le cas présent soit radial comme entre 42a et 42b. D'un côté de ce bobinage, les extrémités des pièces polaires fixes 44 et 47 sont bien dirigées vers les dents 61 du rotor. Mais de l'autre côté, le flux rencontrant les bords extérieurs des pièces polaires 44 et 47 est obligé de se rabattre à gauche et à droite pour contourner les conducteurs 42a et 42b, comme indiqué par les flèches, pour retrouver les dents 61 du rotor, mais dans des zones polaires où elles sont déphasées d'un demi-pas de dent. A ce détour près, on retrouve donc le fonctionnement du mode de réalisation selon les figures 4 et 5. Cependant, dans le cas des figures 6 et 7, le bobinage est plus onéreux. En utilisant des bobinages du type à pôles saillants, il serait aussi possible d'imbriquer les deux phases A et B, ou même trois phases sur le même stator.

Curieusement, on peut constater que ce troisième mode de réalisation correspond exactement à la réalisation classique des moteurs pas-à-pas hybrides à rotor à aimantation axiale, à la différence près que les tôles centrales de l'empilage du stator ont été remplacées par un aimant permanent de sensiblement même forme. Or ces tôles ne jouent aucun rôle dans la production du couple moteur car leurs dents ne sont pas en face des dents du rotor. Au contraire, elles introduisent des réluctances parasites.

Dans les réalisations précédentes de moteurs rotatifs, il n'existe qu'un seul rotor par phase. Sans sortir du cadre de l'invention, il serait aussi possible de concevoir un moteur avec deux rotors coaxiaux par phase, du type par exemple de celui représenté sur la figure 7, et de réunir par des dispositifs aiguilleurs de flux parallèles à l'axe du moteur, des pièces polaires mobiles appartenant à des rotors différents, de façon que le trajet du flux ait une forme rectangulaire avec un entrefer actif à chaque sommet du rectangle, avec deux aimants mobiles et leurs pièces polaires sur deux côtés opposés et avec deux aimants fixes et leurs pièces polaires sur deux autres côtés opposés, les aimants fixes avec leurs pièces polaires étant entourés chacun par un bobinage.

Enfin, dans une réalisation simplifiée des figures 4 et 5, chaque pièce polaire 25, 30 du rotor pourrait ne comporter que trois dents 38, le moteur étant muni d'un dispositif aiguilleur de flux de la phase A dont les pièces polaires fixes 24 et 27 sont perpendiculaires à l'arbre 21 et traversées en leur centre par une extrémité de cet arbre, en formant un palier, les extrémités de ces pièces polaires 24 et 27 étant cambrées pour définir des entrefers sur des parties diamétralement opposées du rotor, et d'un deuxième dispositif aiguilleur de flux pour la phase B, identique au précédent, mais situé de l'autre côté du rotor et décalé de 90° par rapport au premier.

Les moteurs décrits ci-dessus sont du type rotatif. Pour obtenir un moteur linéaire, il suffit de dérouler par la pensée l'entrefer cylindrique pour le rendre plan et rectiligne, et de prendre une partie de la périphérie du stator et du rotor pour en faire les éléments primaire et secondaire rectilignes et parallèles, l'un d'eux ayant une longueur plus courte que celle de l'autre. Voir par exemple la revue « Machine Outil n° 287, juin 1982, page 179 et suivantes ».

Le brevet allemand 33 38864 montre un tel moteur linéaire, du type pas-à-pas hybride, et classique en ce sens que le bobinage et l'aimant permanent unique et fixe ne constituent pas un dispositif aiguilleur de flux.

Ladite transformation appliquée au moteur rotatif des figures 1 à 3 pour en faire un moteur linéaire donne par exemple le moteur représenté sur les figures 8 et 9, dans lesquelles on a ajouté une vingtaine aux repères homologues précédents.

Dans un but de simplification de la réalisation, les pièces polaires 64, 65, 67 et 70 ont une section en demi-octogone. A l'intérieur de cet octogone, donc entre les éléments primaires et secondaires, sont situés des conducteurs du bobinage 62 qui se referment par l'extérieur.

Il y a deux phases A et B dont les éléments secondaires sont mis dos-à-dos et dont les éléments primaires sont fixés sur un plan Q. Dans un but de simplification, on n'a pas représenté les moyens de guidage du mouvement de translation des éléments secondaires, et, dans la vue de dessus de la figure 9, on n'a représenté que les dents 79 et 80.

On voit qu'on a choisi de rendre plus court l'élément primaire 64-66-67 et on a refermé le bobinage 62 sur cet élément.

Le fonctionnement est le même que celui déjà décrit : avec des courants $i_A$ et $i_B$, on a des flux suivant les flèches de la figure 8 et une force sur les éléments secondaires suivant la flèche F de la figure 9.

Sans sortir du domaine de l'invention, on peut apporter les modifications suivantes :

On peut rendre l'élément secondaire plus court, pour par exemple diminuer l'inertie et la partie mobile. Mais alors, on augmente la longueur de la bobine et la consommation. Cependant, du fait que, suivant l'invention, le bobinage peut être affecté aussi bien au primaire qu'au secondaire, on peut mettre une bobine courte sur le secondaire, mais elle est alors mobile.

Pour qu'un retour du bobinage 22 soit également utile, on peut loger autour de ce retour un deuxième ensemble primaire-secondaire de la même phase, situé dans la même zone axiale. Cela permet par ailleurs de compenser les efforts latéraux exercés sur la partie mobile.

Avec 3 phases ABC, les éléments primaires de ces trois phases peuvent être situées sur un même plan Q, ou sur deux plans parallèles entre lesquels passent les éléments secondaires. Ils peuvent aussi être disposés suivant un cercle à l'intérieur duquel passent les éléments secondaires. Les différentes phases peuvent aussi être logées dans des zones axiales différentes.

Au lieu de partir du moteur rotatif des figures 1 à 3 pour le transformer en moteur linéaire, on peut aussi partir d'un moteur semblable au précédent, mais dans lequel on fait pivoter de 90° le circuit magnétique de l'élément secondaire de façon à ce que les dents 18 et 19, qui étaient parallèles à l'axe 1, deviennent perpendiculaires à cet axe, l'élément secondaire se déplaçant alors parallèlement à cet axe en passant à travers le bobinage 2 de la phase A, ainsi qu'à travers celui de la phase B. Bien entendu, le circuit magnétique de l'élément primaire doit aussi être tourné de 90°. Après redressement des surfaces d'entrefer et regroupement des deux aimants 9 provenant de la coupe suivant la figure 1, on aboutit au moteur linéaire représenté sur la figure 8A, sur laquelle on a ajouté une vingtaine aux éléments homologues précédents. On voit que l'élément secondaire est constitué par deux crémaillères 85 et 90 linéaires et planes, séparées par un aimant permanent plan 89. Cet élément secondaire se déplace suivant son axe, les dents 98 et 99 des crémaillères étant situées sur les faces extérieures opposées et étant perpendiculaires à la direction du déplacement.

La carcasse de bobine 83 porte le bobinage 82 de la phase A, et a une âme sensiblement rectangulaire. Elle est traversée par l'élément secondaire 85, 89, 90.

Deux pièces polaires 84 et 87 de l'élément primaire ont une forme de cadre plan dont l'ouverture centrale correspond à la section axiale de la carcasse 83 de la bobine parallèle aux plans des crémaillères. Ces pièces polaires sont encastrées sur la carcasse de bobine 83 de manière que les dents 98 et 99 des crémaillères 85 et 90 se trouvent en face des bras perpendiculaires à l'axe de la bobine, c'est-à-dire horizontaux haut et bas de chaque pièce polaire 84-87. Sur les faces correspondantes de ces bras apparaissent des dents 97 et 100 obtenues, par exemple par fraisage de rainures.

Entre les bras verticaux se faisant vis-à-vis des pièces polaires 84 et 87 sont introduits deux aimants permanents 86a et 86b dont les axes d'aimantation sont perpendiculaires aux faces d'appui et opposés à l'axe d'aimantation de l'aimant permanent 89. Ces aimants permanents sont donc situés de part et d'autre du bobinage 82 à proximité de ce dernier.

Des goujons épaulés 95 permettent de maintenir avec précision l'assemblage 82, 83, 84, 86a, 86b, 87 constituant l'élément primaire ou stator de la phase A.

Des longerons 94, également maintenus par les goujons 95, permettent de positionner au moins une deuxième phase B dans le prolongement de la phase A, avec un décalage d'une fraction de pas polaire des dents des crémaillères par rapport à la phase A.

Des entretoises 92, à chaque extrémité de deux longerons, portent des moyens de guidage de l'élément secondaire, par exemple sous la forme de galets ou roulements 91 (le chemin de roulement correspondant sur les crémaillères n'a pas été représenté dans un but de clarté).

On constate que le champ du bobinage 82 est perpendiculaire à la direction d'aimantation de l'aimant permanent 89 et dirigé vers l'une ou l'autre des extrémités des crémaillères 85 et 90 où sont définis les entrefers avec les pièces polaires 84 et 87, constituant ainsi un dispositif aiguilleur du flux. Il en est de même, quoique d'une manière moins évidente, pour les aimants permanents 86a et 86b. En effet, à l'extérieur et à proximité du bobinage 82, les conducteurs de ce bobinage, provoquent un champ opposé à celui créé à l'intérieur du bobinage. Comme les aimants permanents 86a et 86b sont placés contre ce bobinage 82, ils sont soumis à un champ perpendiculaire à leur direction d'aimantation et dirigés vers l'une ou l'autre des extrémités des pièces polaires 84 et 87 où sont définis les entrefers avec les crémaillères 85 et 90. Avec un exemple un champ de la bobine dirigé à son intérieur vers le haut, le flux de l'aimant permanent 89 est obligé de se diriger vers le haut où il traverse un entrefer pour passer dans le bras horizontal haut de la pièce polaire 84. De là, il passe par moitié par les bras verticaux où il est happé par les aimants permanents 86a, 86b. Il est obligé par le champ extérieur de la bobine de se diriger vers le bas où il passe dans le bras horizontal inférieur de la pièce polaire 87. Il traverse ensuite un entrefer pour atteindre la crémaillère 90 où il est happé par l'aimant permanent 89.

Bien entendu, la longueur des crémaillères correspond à la course utile augmentée de la longueur couverte par les phases. De plus, le mot cadre concernant la forme des pièces polaires doit être pris dans son sens large, l'un des bras verticaux de ce cadre pouvant éventuellement être supprimé.

Dans un autre domaine, l'introduction d'au moins un dispositif aiguilleur de flux dans un moteur pas-à-pas à aimant permanent fixe et mobile permet d'utiliser un nouveau dispositif avantageux de commutation pour la commande d'un tel moteur.

Quand on excite une phase, le couple moteur doit vaincre le couple de maintien résiduel (ou de détente) de l'autre phase, en plus de la charge normale du moteur. Il serait intéressant de supprimer ce couple par une commande électrique, spécialement si ce couple a été augmenté par l'introduction d'un deuxième aimant permanent.

Or, on sait qu'il est difficile d'annuler le flux d'un aimant permanent passant dans un entrefer fermé au moyen de l'excitation d'un bobinage. Si l'excitation est trop faible, elle est inefficace. Si elle est trop forte, on provoque une nouvelle attraction par le flux de fuite passant dans l'entrefer. Or la réluctance d'un entrefer fermé est souvent mal définie et variable. Avec un moteur classique, il n'est donc pas possible d'envisager de déverrouiller une phase au moyen d'une excitation inverse de cette phase.

Par contre, avec un dispositif aiguilleur de flux, une excitation plus ou moins grande renforce la sortie validée, sans inverser la sortie non validée, qui a un flux pratiquement nul. Avec un deuxième aimant permanent, on arrive même à avoir des forces de répulsion (on impose au champ d'un aimant permanent une déformation telle que cet aimant ait intérêt à se déplacer pour retrouver un écoulement non contraint de son flux).

Un premier dispositif de commutation est illustré par les figures 10 à 12. Sur la figure 10, on a représenté un moteur M conforme à l'invention, comportant deux phases A et B. Les bobinages de ces phases sont reliés à un dispositif de commande électronique E recevant une alimentation de puissance P et une commande logique L. Supposons qu'une impulsion positive $C^+$ se termine sur la phase A au temps t1 comme représenté sur la figure 11. On envoie alors, par exemple, une impulsion $C^+$ sur la phase B de t1 à t3. Mais le procédé suivant l'invention prévoit d'envoyer également une impulsion $D^-$ sur la phase A. Cette impulsion sert au déverrouillage de la phase A. Par rapport à l'impulsion $C^+$ précédente, sur la phase A, elle a un signe opposé, une amplitude inférieure et une durée t1, t2 plus courte. De même, au temps t3, on suppose qu'on envoie une impulsion $C^-$ de t3 à t5 sur la phase A pour poursuivre le mouvement dans le même sens. Là encore, l'invention prévoit d'envoyer une impulsion $D^-$ identique à la précédente, mais sur B, de t3 à t4. On a ensuite représenté une impulsion $D^+$ sur A de t5 à t6 alors qu'il y a une impulsion $C^-$ sur B de t5 à t7, et ainsi de suite. On voit qu'ainsi tout le volume du bobinage est utilisé pendant la phase critique d'accélération du moteur. On aurait pu, bien sûr, avoir plus de deux phases.

Sur la figure 12, on retrouve les mêmes impulsions mais ces impulsions ont la forme d'alternances sensiblement sinusoïdales, au lieu d'impulsions carrées. De plus, on remarque que chaque impulsion $D^+$ ou $D^-$ est suivie d'une autre impulsion F⁻ ou F⁺ identique à la précédente, mais de signe opposé. On voit ainsi qu'on envoie dans une phase une succession d'alternances positives et négatives à une certaine fréquence, mais séparées, au moment du passage à zéro, par une suite de deux alternances de fréquence double, chaque alternance ayant un signé opposé à celui de la précédente.

Ces impulsions F servent à freiner le rotor au moment où il s'approche de sa position d'équilibre, de façon à éviter des oscillations autour de cette position momentanée d'équilibre. Ce dispositif permet donc d'augmenter le couple disponible sur l'arbre du moteur et la fréquence maximum de fonctionnement du moteur, en évitant les résonances.

Au lieu d'avoir des tensions de formes particulières, il est intéressant d'utiliser directement un réseau polyphasé tel que le secteur triphasé. Un moteur avec un seul bobinage de phase se comporte alors comme un moteur homopolaire.

Sur la figure 13, représentant un deuxième dispositif de commutation, on a représenté en A-B-C les 3 phases du bobinage 2 du moteur et en α-β-γ les tensions d'un réseau triphasé. Des redresseurs contrôlés tels que des triacs I-II et III d'un circuit électronique de puissance EP permettent d'alimenter les enroulements A-B-C par les 3 tensions triphasées α-β-γ. D'autres triacs IV et V de EP permettent de faire une permutation des tensions de phase β et γ. Le moteur pas-à-pas fonctionne alors en moteur synchrone réversible. Il est cependant encore possible d'avoir un déplacement contrôlé avec arrêt indexé au moyen d'un circuit électronique de logique EL agencé de la manière suivante :

Ce circuit reçoit les tensions des phases pour connaître à chaque instant le déphasage de chaque phase par rapport à un point neutre N. Il reçoit aussi les informations concernant le nombre de pas n à effectuer et le sens de rotation choisi CW ou CCW. Il commande enfin les gâchettes des triacs.

Pour provoquer un arrêt, on cesse l'excitation des gâchettes pour provoquer l'extinction successive naturelle de chaque phase. Le moment où on coupe l'excitation des gâchettes est choisi de façon à ce que la dernière phase à s'éteindre soit celle où on veut s'arrêter avec la paire d'entrefers fermés correspondant au sens du courant avant l'extinction.

Dans l'exemple représenté sur le diagramme tension/temps de la figure 14, on s'arrête au temps t = 0 sur la phase B avec une impulsion positive. Depuis le temps t = —1, la phase C n'était plus alimentée et on n'a donc pas eu sur cette phase l'impulsion de déverrouillage, ce qui facilite l'arrêt du moteur.

Depuis le temps t = —2 la phase A n'était plus non plus alimentée, et on n'a donc pas eu sur cette phase l'impulsion de déverrouillage ni un début de couple moteur, ce qui facilite aussi l'arrêt du moteur. La coupure de l'excitation des gâchettes peut donc être programmée entre les temps t = —3 et t = —2.

Sur la figure 14, on a supposé qu'on faisait ensuite, après un temps d'arrêt, un déplacement en sens inverse de 13 pas. On commute donc sur B au temps voulu la phase γ au moment où elle passe par zéro en valeur décroissante, pour reprendre la tension sinusoïdale alimentant B comme si on ne s'était pas arrêté. En même temps, la phase C est alimentée avec la tension β et la phase A avec la tension α. Au lieu des triacs I-II-III, on a maintenant les triacs I-IV-V conducteurs. On voit que la tension qui apparaît brusquement sur la phase A provoque un couple moteur jusqu'au temps t = +2. De même, sur la phase C, on a la fin d'un couple moteur jusqu'au temps t = +1. Sur la phase B, on commence par avoir un couple de déverrouillage, qui se transforme en couple moteur dès que le moteur a commencé à se déplacer. L'arrêt au temps t = 13 se produit comme précédemment par extinction successive naturelle des phases.

On voit donc que les performances d'accélération et des décélérations sont améliorées par rapport à un moteur où une seule phase serait alimentée à la fois, avec des impulsions de courant continu. De plus, les circuits électroniques sont simplifiés.

Au lieu d'avoir 6 possibilités d'arrêt par période du réseau triphasé, si on acceptait d'avoir une seule possibilité d'arrêt (sur une phase donnée, avec une polarité donnée), le circuit électronique EL serait encore simplifiée car on n'aurait plus besoin de garder la mémoire de la position sur laquelle on s'est arrêté précédemment.

Bien entendu, il est également possible d'appliquer à ce dispositif de commutation, des perfectionnements tels que celui consistant à alimenter le moteur avec une tension à fréquence à variations programmées.

## Revendications

1. Moteur pas-à-pas de type hybride polyphasé comprenant un élément primaire tel qu'un stator qui comporte un bobinage (2, 22, 42a, 42b, 42c, 62, 82) par phase (A, B), un élément secondaire susceptible de se déplacer par rapport à l'élément primaire et un aimant permanent (9, 29, 49, 69, 89) dont les faces polaires sont munies de deux pièces polaires (5a, 5b ; 10a, 10b ; 25, 30 ; 45, 50 ; 65, 70, 85, 90) dont les extrémités définissent des entrefers avec le reste du circuit magnétique, de façon que pour certaines positions relatives des éléments primaire et secondaire, on réalise un circuit magnétique fermé comprenant l'aimant permanent et deux entrefers fermés, caractérisé en ce qu'il comporte par phase un deuxième aimant permanent (6, 26, 46, 66, 86a, 86b) également muni, sur ses faces polaires, de deux pièces polaires (4a, 4b ; 7a, 7b ; 24, 27 ; 44, 47 ; 64 ; 67 ; 84, 87) dont des extrémités définissent les entrefers avec les extrémités des pièces polaires (5a, 5b ; 10a, 10b, 25, 30 ; 45, 50 ; 65, 70, 85, 90) du premier aimant permanent (9, 29, 49, 69, 89) de façon à avoir un aimant permanent dans l'élément primaire et un autre dans l'élément secondaire, chaque entrefer étant ainsi encadré par deux aimants permanents, l'un (6, 26, 46, 66, 86a, 86b) mobile et l'autre (9, 29, 49, 69, 89) fixe, l'un en amont de la circulation du flux et l'autre en aval, et en ce que ce deuxième aimant permanent (6, 26, 46, 66, 86a, 86b) est orienté de façon à ce que le champ (H1) du bobinage (2, 22, 42a, 42b, 42c, 62, 82) de la phase correspondante soit perpendiculaire à la direction de son aimantation et dirigé vers l'une ou l'autre des extrémités de chacune de ses pièces polaires (4a, 4b ; 7a, 7b ; 24, 27 ; 44, 47 ; 64, 67 ; 84, 87) définissant les entrefers, de manière à créer un dispositif aiguilleur du flux.

2. Moteur selon la revendication 1, caractérisé en ce que le premier aimant permanent (9, 29, 49, 69, 89) est également orienté de façon que le champ (H1) du bobinage (2, 22, 42a, 42b, 42c, 62, 82) de la phase correspondante soit perpendiculaire à la direction de son aimantation et dirigé vers l'une ou l'autre des extrémités de chacune de ses pièces polaires (5a, 5b ; 10a, 10b ; 25, 30 ; 45, 50 ; 65, 70 ; 85, 90) définissant des entrefers, de manière a ce que le moteur comporte par phase deux dispositifs aiguilleurs de flux en série, l'un dans l'élément primaire et l'autre dans l'élément secondaire, définissant quatre rangées d'entrefers.

3. Moteur selon la revendication 2, dans lequel l'élément secondaire est un rotor tournant autour d'un arbre (1), caractérisé en ce que le bobinage (2) a la forme d'un tore de section sensiblement circulaire, centré sur l'arbre (1) du moteur.

4. Moteur selon la revendication 3, caractérisé en ce que les pièces polaires fixes (4a, 4b, 7a, 7b) ont la forme générale d'un tore qui enveloppe le bobinage (2) à la manière d'un pneumatique par rapport à une chambre à air, et en ce que les pièces polaires mobiles (5a, 5b ; 10a, 10b) ont, par rapport au bobinage (2) et à l'arbre (1), une forme analogue à celle qu'a une jante d'une roue équipée d'un pneumatique par rapport à sa chambre à air et à l'axe de la roue.

5. Moteur selon la revendication 4, caractérisé en ce que chaque pièce polaire est constituée par deux demi-coquilles (4a, 4b ; 5a, 5b ; 7a, 7b ; 10a, 10b) emboîtées suivant le plan diamétral P du tore du bobinage (2).

6. Moteur selon la revendication 5, caractérisé en ce que la surface cylindrique où sont situés les entrefers a un diamètre inférieur au diamètre intérieur du tore du bobinage (2), muni d'une carcasse isolante de protection (3).

7. Moteur selon l'une des revendications 5 ou 6, caractérisé en ce que deux demi-coquilles statoriques extérieures appartenant à deux phases (A et B) différentes, sont munies chacune de ponts cylindriques (16) pour permettre l'assemblage indexé des deux phases (A et B) et en ce que les deux autres demi-coquilles statoriques extérieures appartenant à ces deux phases (A et B) sont munies chacune d'un prolongement axial cylindrique (13) dans lequel est montée une bague non magnétique (12) portant un roulement (11) sur lequel est emmanché l'arbre (1).

8. Moteur selon l'une des revendications 1 ou 2, caractérisé en ce que par phase (A, B) les pièces polaires (64, 67) de l'élément primaire et les pièces polaires (65, 70) de l'élément secondaire sont rectilignes, parallèles et de section incurvée et définissent entre elles des entrefers plans et parallèles, en ce que les pièces polaires (64, 67) d'un élément sont plus courtes que celles (65, 70) de l'autre élément, en ce que le bobinage (62) se referme autour d'un des éléments, en ce que des conducteurs du bobinage (63) sont situés entre les éléments primaire et secondaire, le bobinage se refermant par l'extérieur autour d'un de ces éléments et en ce qu'il est prévu des moyens de guidage par translation d'au moins deux éléments secondaires appartenant à des phases (A, B) différentes, de façon à réaliser un moteur pas-à-pas linéaire.

9. Moteur selon la revendication 2, caractérisé en ce que l'élément secondaire est constitué par deux crémaillères (85, 90) linéaires pouvant se déplacer suivant leur axe, séparées par un aimant permanent (89), les dents (98, 99) des crémaillères étant perpendiculaires à la direction du déplacement, en ce que chaque bobinage (82) de phase (A, B...) est traversée par l'élément secondaire, en ce que pour chaque phase (A, B...) deux pièces polaires (84, 87) de l'élément primaire ont une forme de cadre dont l'ouverture centrale correspond à la section axiale de la carcasse (83) de la bobine parallèle aux plans des crémaillères (85, 90), en ce que ces pièces polaires (84, 87) sont encastrées sur la carcasse (83) de la bobine de manière à ce que les dents (98, 99) des crémaillères (85, 90) se trouvent en face des bras perpendiculaires à l'axe de la bobine de chaque pièce polaire (84, 87), sur les faces desquelles apparaissent des dents (97, 100), en ce que des aimants permanents (86a, 86b) sont introduits entre les bras des pièces polaires (84, 87) qui sont parallèles à l'axe de la bobine et qui se font vis-à-vis et en ce que les axes d'aimantation des aimants permanents (86a, 86b) de l'élément primaire sont parallèles et de sens opposés à l'axe d'aimantation de l'aimant permanent (89) de l'élément secondaire, de façon à réaliser un moteur pas-à-pas linéaire.

10. Moteur selon la revendication 1, dans lequel l'élément secondaire est un rotor constitué par un aimant permanent (29) en forme d'anneau, à aimantation axiale, muni de pièces polaires mobiles (25, 30) perpendiculaires à l'arbre (21), caractérisé en ce que les pièces polaires fixes (24, 27) de l'élément primaire sont situées respectivement dans les mêmes plans que les pièces polaires mobiles (25, 30) et ont une partie centrale entourée par le bobinage (23) dont l'axe est perpendiculaire à l'arbre (21) et situé à une distance constante de ce dernier, et en ce qu'il comprend plusieurs ensembles (26, 24, 27) d'aimant permanent et de pièces polaires fixes disposés le long de la périphérie du rotor.

11. Moteur selon la revendication 1, dans lequel l'élément secondaire est un rotor constitué par un aimant permanent (49) en forme d'anneau à aimantation axiale, muni de pièces polaires mobiles (45, 50) perpendiculaires à l'arbre (41) et dans lequel le stator est constitué par des tôles en forme d'anneau, empilées suivant l'axe de l'arbre (41) du moteur et pourvues d'encoches, dans lesquelles sont logés les bobinages (42a, 42b, 42c...), caractérisé en ce que l'aimant permanent fixe (46) a également une forme en anneau semblable à celle des pièces polaires fixes (44, 47) et est intercalé au centre de l'empilage des tôles du stator, dans la zone axiale où le rotor ne comporte pas de dents (58).

12. Dispositif pour commander un moteur pas-à-pas hybride, conforme à l'une des revendications 1 à 11, comprenant un circuit électronique (E) adapté pour envoyer des impulsions aux différentes phases du moteur, caractérisé en ce que le circuit électronique (E) comprend des moyens pour qu'après un positionnement par l'excitation d'une certaine phase dans un sens déterminé, une excitation ultérieure d'une autre phase est accompagnée d'une excitation inverse de la phase précédemment excitée, avec une amplitude et une durée inférieures à celles de ladite précédente excitation, de façon à obtenir une impulsion de déverrouillage du couple de maintien résiduel du moteur.

13. Dispositif de commande selon la revendication 12, destiné à un moteur comportant deux phases (A, B), le circuit électronique étant adapté pour envoyer des impulsions d'excitation ayant sensiblement la forme d'alternances positives et négatives provenant d'une sinusoïde d'une certaine fréquence, caractérisé en ce que ce circuit comprend des moyens pour séparer deux alternances au moment de leur passage à zéro par deux alternances de fréquence double de celle de la sinusoïde d'origine, chaque alternance ayant un signe opposé à celui de la précédente.

14. Dispositif pour commander un moteur pas-à-pas hybride, comportant trois phases (A, B, C), conforme à l'une des revendications 1 à 11, comprenant un circuit électronique de logique (EL) contrôlant un circuit électronique de puissance (EP) adapté pour envoyer des impulsions aux différentes phases du moteur, caractérisé en ce que les trois phases (α, β, γ) d'un réseau de tensions triphasés sont réunies chacune à un des enroulements (A, B, C) des trois phases du moteur, dans un sens direct (CW) ou inverse (CCW) au moyen de redresseurs contrôlés (I, II, III, IV, V) tels que des triacs, constituant le circuit électronique de puissance (EP), en ce que le circuit électronique de logique (EL) contrôle les gâchettes des redresseurs (I, II, III, IV, V) de façon à ce qu'un arrêt du moteur se produise par arrêt de l'excitation des gâchettes commandées, provoquant l'extinction successive naturelle des trois phases, la dernière phase à s'éteindre étant celle sur laquelle on veut s'arrêter à entrefer fermé, et de façon à ce qu'un nouveau démarrage du moteur se produise par une excitation simultanée des gâchettes concernées, à l'instant d'une période où l'on retrouve sur la phase où l'on s'était arrêté précédemment, une tension nulle et variant dans le même sens que lors de la dernière extinction, et en ce que des informations concernant le nombre de pas à effectuer et le sens de rotation sont fournies au circuit électronique de logique (EL) à chaque nouveau déplacement à effectuer.

**Claims**

1. Stepping motor of the hybrid multi-phase type, comprising a primary element such as a stator which comprises one winding (2, 22, 42a, 42b, 42c, 62, 82) per phase (A, B), a secondary element which is displaceable with respect to the primary element and a permanent magnet (9, 29, 49, 69, 89) the pole faces of which are equipped with two pole pieces (5a, 5b ; 10a, 10b ; 25, 30 ; 45, 50 ; 65, 70, 85, 90) the ends of which define gaps with the rest of the magnetic circuit in such a manner that, for certain relative positions of the primary and secondary elements a closed magnetic circuit is achieved which comprises the permanent magnet and two closed gaps, characterised in that it comprises, per phase, a second permanent magnet (6, 26, 46, 66, 86a, 86b) which is also equipped on its pole faces with two pole pieces (4a, 4b ; 7a, 7b ; 24, 27 ; 44, 47 ; 64 ; 67 ; 84, 87) the ends of which define gaps with the ends of the pole pieces (5a, 5b ; 10a, 10b ; 25, 30 ; 45, 50 ; 65, 70, 85, 90) of the first permanent magnet (9, 29, 49, 69, 89) in such a manner that one permanent magnet is in the primary element and another in the secondary element, each gap thus being flanked by two permanent magnets, one of which (6, 26, 46, 66, 86a, 86b) is mobile and the other one (9, 29, 49, 69, 89) fixed, one upstream of the flux circulation and the other one downstream, and in that this second permanent magnet (6, 26, 46, 66, 86a, 86b) is oriented in such a manner that the field (H1) of the winding (2, 22, 42a, 42b, 42c, 62, 82) of the corresponding phase is perpendicular to the direction of its magnetization and directed towards one or the other of the ends of each of its pole pieces (4a, 4b ; 7a, 7b ; 24, 27 ; 44, 47 ; 64, 67 ; 84, 87) defining the gaps, in such a manner as to create a flux switching device.

2. Motor as claimed in claim 1, characterized in that the first permanent magnet (9, 29, 49, 69, 89) is also oriented in such a manner that the field (H1) of the winding (2, 22, 42a, 42b, 42c, 62, 82) of the corresponding phase is perpendicular to the direction of its magnetization and directed towards one or the other of the ends of each of its pole pieces (5a, 5b ; 10a, 10b ; 25, 30 ; 45, 50 ; 65, 70 ; 85, 90) defining the gaps, in such a manner that the motor comprises, per phase, two flux switching devices in series, one in the primary element and the other in the secondary element, which define four rows of gaps.

3. Motor as claimed in claim 2, in which the secondary element is a rotor turning around a shaft (1) characterized in that the winding (2) has the shape of a toroid of approximately circular cross-section, which is centered on the shaft (1) of the motor.

4. Motor as claimed in claim 3, characterized in that the fixed pole pieces (4a, 4b, 7a, 7b) have the general shape of a toroid which surrounds the winding (2) in the fashion of a tyre with respect to an air chamber, and in that the mobile pole pieces (5a, 5b ; 10a, 10b) have, with respect to the winding (2) and the shaft (1), a shape which is analogous to that of a wheel rim equipped with a tyre with respect to its air chamber and the axis of the wheel.

5. Motor as claimed in claim 4, characterized in that each pole piece consists of two half molds (4a, 4b ; 5a, 5b ; 7a, 7b ; 10a, 10b) fitted along the diametral plane P of the winding toroid (2).

6. Motor as claimed in claim 5, characterized in that the cylindrical surface on which the gaps are located has a diameter which is less than the inside diameter of the winding toroid (2) equipped with an insulating protective former (3).

7. Motor as claimed in any of claims 5 or 6, characterized in that two external stator half molds belonging to two different phases (A and B) are each equipped with cylindrical bridges (16) for allowing indexed assembly of the two phases (A and B) and in that the two other external stator half molds belonging to these two phases (A and B) are each equipped with a cylindrical axial extension (13) in which is mounted a non-magnetic collar (12) carrying a bearing (11) on which is fitted the shaft (1).

8. Motor as claimed in any of claims 1 or 2, characterized in that per phase, (A, B) the pole pieces (64, 67) of the primary element and the pole pieces (65, 70) of the secondary element are rectilinear, parallel and of non-curved section and between them define plane and parallel gaps, in that the pole pieces (64, 67) of one element are shorter than those (65, 70) of the other element in that the winding (62) closes around one of the elements, in that the winding conductors (63) are located between the primary and secondary elements, the winding closing on the outside around one of these elements and in that guidance means are provided by translation of at least two secondary elements belonging to different phases (A, B), in order to produce a linear stepping motor.

9. Motor as claimed in claim 2, characterized in that the secondary element consists of two linear racks (85, 90) which can move along their axis and which are separated by a permanent magnet (89), the teeth (98, 99) of the racks being perpendicular to the direction of movement, in that each phase (A, B....) winding (82) is traversed by the secondary element, in that for each phase (A, B...) two pole pieces (84, 87) of the primary element have a frame shape the central opening of which corresponds to the axial cross-section of the winding former (83) parallel to the planes of the racks (85, 90), in that these pole pieces (84, 87) are fitted onto the winding former (83) in such a manner that the teeth (98, 99) of the racks (85, 90) are located opposite arms which are perpendicular to the axis of the winding of each pole piece (84, 87) on the faces of which appear teeth (97, 100), in that the permanent magnets (86a, 86b) are introduced between the arms of pole pieces (84, 87) which are parallel to the axis of the winding and which are opposite each other and in that the axes of magnetization of the permanent magnets (86a, 86b) of the primary element are parallel and of opposite direction to the axis of magnetization of the permanent magnet (89) of the secondary element, in order to produce a linear stepping motor.

10. Motor as claimed in claim 1, in which the secondary element is a rotor consisting of a permanent magnet (29) of annular shape, with axial magnetization, equipped with mobile pole pieces (25, 30) which are perpendicular to the shaft (21), characterized in that the fixed pole pieces (24, 27) of the primary element are located respectively in the same planes as the mobile pole pieces (25, 30) and have a central part surrounded by the winding (23) the axis of which is perpendicular to the shaft (21) and located at a constant distance from this latter, and in that it comprises several assemblies (26, 24, 27) of a permanent magnet and of fixed pole pieces arranged along the periphery of the rotor.

11. Motor as claimed in claim 1, in which the secondary element is a rotor consisting of a permanent magnet (49) of annular shape and with axial magnetization, equipped with mobile pole pieces (45, 50) which are perpendicular to the shaft (41) and in which the stator consists of plates of annular shape stacked along the axis of the shaft (41) of the motor and provided with notches in which are located the windings (42a, 42b, 42c...), characterized in that the fixed permanent magnet (46) also has an annular shape similar to that of the fixed pole pieces (44, 47) and is interleaved at the center of the stack of plates of the stator in the axial zone where the rotor does not have teeth (58).

12. Device for controling a hybrid stepping motor as claimed in any of claims 1 to 11, comprising an electronic circuit (E) adapted for sending pulses to different phases of the motor, characterized in that the electronic circuit (E) comprises means for providing that, after a positioning by the excitation of a certain phase in a predetermined direction, a subsequent excitation of another phase is accompanied by an inverse excitation of the previously excited phase, with an amplitude and duration which are lower than those of the said previous excitation, in such a manner as to obtain a releasing pulse for the residual holding torque of the motor.

13. Device for controling as claimed in claim 12, intended for a motor comprising two phases (A, B), the electronic circuit being adapted for sending excitation pulses having approximately the shape of positive and negative alternations originating from a sinusoidal wave form with a certain frequency, characterized in that the circuit comprises means for separating two alternations at the instance when they pass through zero by two alternations with twice the frequency of that of the original sinusoidal wave form, each alternation having a sign which is opposite to that of the preceding one.

14. Device for controling a hybrid stepping motor, comprising three phases (A, B, C) as claimed in any of claims 1 to 11, comprising an electronic logic-circuit (EL) controling an electronic power circuit (EP) adapted for sending pulses to different phases of the motor, characterized in that the three phases ($\alpha$, $\beta$, $\gamma$) of a three-phase voltage network are each linked to one of the windings (A, B, C) of three phases of the motor, in a direct (CW) or inverse (CCW) direction by means of controlled rectifiers (I, II, III, IV, V) such as triacs, constituting the electronic power circuit (EP), in that the electronic logic circuit (EL) drives the gates of the rectifiers (I, II, III, IV, V) in such a manner that a motor stop is produced by stopping the excitation of the controlled gates, producing the natural successive extinction of these three phases, the last phase to be extinguished being that on which it is desired to stop the closed gap, and in such a manner that a new starting of the motor is produced by a simultaneous excitation of the gates concerned at the instant of a period on the phase where the motor happens to be or where it has been previously stopped, a zero voltage and varying in the same direction as at the last extinction, and in that the information concerning the number of steps to be carried out and the direction of rotation are supplied to the electronic logic circuit (EL) at each new movement to be carried out.

**Patentansprüche**

1. Schrittmotor vom mehrphasigen Hybridtyp, mit einem primären Element wie einem Stator, der eine Wicklung (2, 22, 42a, 42b, 42c, 62, 82) pro phase (A, B) aufweist, einem sekundären Element, das sich bezüglich dem primären Element bewegen soll, und einem Permanentmagnet (9, 29, 49, 69, 89), dessen Polflächen mit zwei Polstücken (5a, 5b ; 10a, 10b ; 25, 30 ; 45, 50 ; 65, 70, 85, 90) besetzt sind, deren Enden Eisenspalte mit dem übrigen Teil des Magnetkreises bilden, so daß für bestimmte Relativstellungen des primären Elementes und des sekundären Elementes ein geschlossener Magnetkreis verwirklicht wird, welcher den Permanentmagnet und zwei geschlossene Eisenspalte umfaßt, dadurch gekennzeichnet, daß er pro phase einen zweiten Permanentmagnet (6, 26, 46, 66, 86a, 86b) umfaßt, der gleichfalls auf seinen Polflächen mit zwei Polstücken (4a, 4b ; 7a, 7b ; 24, 27 ; 44, 47 ; 64 ; 67 ; 84, 87) besetzt ist, deren Enden die Eisenspalte mit den Enden der Polstücke (5a, 5b ; 10a, 10b ; 25, 30, 45, 50 ; 65, 70, 85, 90) des ersten Permanentmagneten (9, 29, 49, 69, 89) bilden, so daß ein Permanentmagnet in dem primären Element und ein weiterer in dem sekundären Element verfugbar ist, wobei jeder Eisenspalt so von zwei Permanentmagneten eingerahmt ist, von denen der eine (6, 26, 46, 66, 86a, 86b) beweglich und der andere (9, 29, 49, 69, 89) ortsfest ist, wobei der eine sich stromaufwärts und der andere stromabwärts bezüglich des Magnetflusses befindet, und daß dieser zweite Permanentmagnet (6, 26, 46, 66, 86a, 86b) in solcher Weise orientiert ist, daß das Feld (H1) der Wicklung (2, 22, 42a, 42b, 42c, 62, 82) der entsprechenden Phase senkrecht zu seiner Magnetisierungsrichtung und gegen das eine oder das andere der Enden jedes seiner Polstücke (4a, 4b ; 7a, 7b ; 24, 27 ; 44, 47 ; 64, 67, 84, 87) gerichtet ist, welche die Eisenspalte begrenzen, so daß eine Fluß-Umlenkvorrichtung geschaffen wird.

2. Motor nach Anspruch 2, dadurch gekennzeichnet, daß der erste Permanentmagnet (9, 29, 49, 69, 89) gleichfalls so orientiert ist, daß das Feld (H1) der Wicklung (2, 22, 42a, 42b, 42c, 62, 82) der entsprechenden Phase senkrecht zur Richtung seiner Magnetisierung sowie gegen das eine oder andere der Enden jedes seiner Polstücke (5a, 5b ; 10a, 10b ; 25, 30 ; 45, 50 ; 65, 70 ; 85, 90) gerichtet ist, welche Eisenspalte begrenzen, so daß der Motor pro Phase zwei in Reihe liegende Fluß-Umlenkvorrichtungen aufweist, die eine in dem primären Element und die andere in dem sekundären Element, welche vier Reihen von Eisenspalten begrenzen.

3. Motor nach Anspruch 2, bei welchem das sekundäre Element ein Rotor ist, der um eine Welle (1) rotiert, dadurch gekennzeichnet, daß die Wicklung (2) die Form eines Ringes von im wesentlichen kreisrundem Querschnitt aufweist, der auf die Welle (1) des Motors zentriert ist.

4. Motor nach Anspruch 3, dadurch gekennzeichnet, daß die ortsfesten Polstücke (4a, 4b, 7a, 7b) die allgemeine Form eines Ringes aufweisen, welcher die Wicklung (2) einhüllt, ähnlich wie ein Luftreifen in bezug auf eine Luftkammer, und daß die beweglichen Polstücke (5a, 5b ; 10a, 10b) bezüglich der Wicklung (2) und der Welle (1) eine Form aufweisen, die analog derjenigen einer Felge eines Rades ist, das mit einem Luftreifen versehen ist, in bezug auf seine Luftkammer und die Achse des Rades.

5. Motor nach Anspruch 4, dadurch gekennzeichnet, daß jedes Polstück durch zwei Halbschalen (4a, 4b ; 5a, 5b ; 7a, 7b ; 10a, 10b) gebildet ist, die entlang der Diametralebene P des Ringes der Wicklung (2) zusammengesteckt sind.

6. Motor nach Anspruch 5, dadurch gekennzeichnet, daß die zylindrische Oberfläche, an welcher die Eisenspalte gelegen sind, einen Durchmesser aufweist, der kleiner als der Innendurchmesser des Ringes der Wicklung (2) ist, versehen mit einem schützenden und isolierenden Wicklungskörper (3).

7. Motor nach Anspruch 5 oder 6, dadurch gekennzeichnet, daß zwei äußere Stator-Halbschalen, die zu zwei verschiedenen Phasen (A und B) gehören, jeweils mit zylindrischen Brücken (16) versehen sind, um den indexierten Zusammenbau der zwei Phasen (A und B) zu ermöglichen, und daß die zwei weiteren äußeren Stator-Halbschalen, welche zu diesen zwei Phasen (A und B) gehören, jeweils mit einer axialen zylindrischen Verlängerung (13) versehen sind, worin ein unmagnetischer Ring (12) angebracht ist, der ein Lager (11) trägt, worauf die Welle (1) aufgesteckt ist.

8. Motor nach Anspruch 1 oder 2, dadurch gekennzeichnet, daß die Polstücke (64, 67) des primären Elementes und die Polstücke (65, 70) des sekundären Elementes pro Phase (A, B) geradlinig, parallel und von gekrümmtem Querschnitt sind sowie zwischen sich ebene und parallele Eisenspalte bilden, daß die Polstücke (64, 67) eines Elementes kürzer als die (65, 70) des anderen Elementes sind, daß die Wicklung (62) um eines der Elemente geschlossen ist, daß die Leiter der Wicklung (63) zwischen dem primären und sekundären Element gelegen sind, wobei die Wicklung außenseitig um eines dieser Elemente geschlossen ist, und daß Translationsführungsmittel für wenigstens zwei der sekundären Elemente vorgesehen sind, welche zu verschiedenen Phasen (A, B) gehören, so daß ein linearer Schrittmotor verwirklicht ist.

9. Motor nach Anspruch 2, dadurch gekennzeichnet, daß das sekundäre Element durch zwei lineare Zahnstangen (85, 90) gebildet ist, die sich entlang ihrer Achse bewegen können und durch einen Permanentmagnet (89) getrennt sind, wobei die Zähne (98, 99) der Zahnstangen senkrecht zur Verschiebungsrichtung sind, daß jede Wicklung (82) einer Phase (A, B...) von dem sekundären Element durchquert wird, daß für jede phase (A, B...) zwei Polstücke (84, 87) des primären Elementes eine Rahmenform aufweisen, deren zentrale Öffnung dem axialen Querschnitt des Wicklungskörpers (83) der Wicklung entspricht, welcher parallel zu den Ebenen der Zahnstangen (85, 90) ist, daß diese Polstücke (84, 87) an dem Wicklungskörper (83) der Wicklung so eingesetzt sind, daß die Zähne (98, 99) der Zahnstangen (85, 90) sich gegenüber den zur Achse der Wicklung jedes Polstückes (84, 87) senkrechten Armen befinden, auf deren Flächen Zähne (97, 100) in Erscheinung treten, daß Permanentmagnete (86a, 86b) zwischen die Arme der Polstücke (84, 87) eingefügt sind, welche parallel zur Achse der Wicklung sind und einander zugewandt sind, und daß die Magnetisierungsachsen der Permanentmagnete (86a, 86b) des primären Elementes parallel und entgegengesetzt gerichtet zur Magnetisierungsachse des Permanentmagneten (89) des sekundären Elementes sind, so daß ein linearer Schrittmotor verwirklicht ist.

10. Motor nach Anspruch 1, bei welchem das sekundäre Element ein Rotor ist, der durch einen Permanentmagnet (29) in Ringform mit axialer Magnetisierung gebildet ist, welcher mit beweglichen Polstücken (25, 30) versehen ist, die senkrecht zur Welle (21) sind, dadurch gekennzeichnet, daß die ortsfesten Polstücke (24, 27) des primären Elementes jeweils in denselben Ebenen wie die beweglichen Polstücke (25, 30) gelegen sind und einen zentralen Teil aufweisen, der von der Wicklung (23) umgeben ist, deren Achse senkrecht zu der Welle (21) ist und sich in konstantem Abstand von dieser befindet, und daß er mehrere Gruppen (26, 24, 27) umfasst, die durch einen Permanentmagnet und ortsfeste Polstücke gebildet sind und die entlang dem Umfang des Rotors angeordnet sind.

11. Motor nach Anspruch 1, bei welchem das sekundäre Element ein Rotor ist, der durch einen Permanentmagnet (49) in Ringform mit axialer Magnetisierung gebildet ist, welcher mit beweglichen Polstücken (45, 50) versehen ist, die senkrecht zur Welle (41) sind, wobei der Stator durch ringförmige Bleche gebildet ist, die entlang der Achse der Welle (41) des Motors aufeinandergestapelt sind und Ausschnitte aufweisen, in welchen die Wicklungen (42a, 42b, 42c...) aufgenommen sind, dadurch gekennzeichnet, daß der ortsfeste Permanentmagnet (46) gleichfalls eine Ringform aufweist, die der der ortsfesten Polstücke (44, 47) gleicht, und in der Mitte des Stapels von Statorblechen in der axialen Zone eingeschoben ist, wo der Rotor keine Zähne (58) aufweist.

12. Vorrichtung zur Steuerung eines Hybrid-Schrittmotors nach einem der Ansprüche 1 bis 11, mit einer elektronischen Schaltung (E), die ausgelegt ist, um Impulse an die verschiedenen Phasen des Motors anzulegen, dadurch gekennzeichnet, daß die elektronische Schaltung (E) Mittel aufweist, damit nach einer Positionierung durch Erregung einer bestimmten Phase in einem bestimmten Sinne eine anschließende Erregung einer anderen Phase von einer entgegengesetzten Erregung der vorausgehend erregten Phase begleitet ist, mit einer Stärke und einer Dauer, die geringer sind als bei der vorausgehenden Erregung, so daß ein Entriegelungsimpuls für das restliche Haltemoment des Motors erzielt wird.

13. Steuervorrichtung nach Anspruch 12, die für einen Motor mit zwei Phasen (A, B) bestimmt ist, wobei die elektronische Schaltung ausgelegt ist, um Erregungsimpulse abzugeben, die im wesentlichen die Form von positiven und negativen Halbwellen aufweisen, welche von einer Sinusschwingung einer bestimmten Frequenz abgeleitet sind, dadurch gekennzeichnet, daß die Schaltung Mittel aufweist, um zwei Halbwellen im Moment ihres Nulldurchganges durch zwei Halbwellen doppelter Frequenz gegenüber der ursprünglichen Sinusform zu trennen, wobei jede Halbwelle ein entgegengesetztes Vorzeichen zu der vorausgehenden aufweist.

14. Vorrichtung zur Steuerung eines Hybrid-Schrittmotors mit drei Phasen (A, B, C), nach einem der Ansprüche 1 bis 11, mit einer elektronischen Logikschaltung (EL), welche eine elektronische Leistungsschaltung (EP) steuert, die ausgelegt ist, um Impulse an die verschiedenen Phasen des Motors abzugeben, dadurch gekennzeichnet, daß die drei phasen (α, β, γ) eines Dreiphasen-Spannungsnetzes jeweils an eine der Wicklungen (A, B, C) der drei Phasen des Motors in einem direkten Sinne (CW) oder entgegengesetzten Sinne (CCW) über gesteuerte Gleichrichter (I, II, III, IV, V) wie Triaks angeschaltet werden, welche die elektronische Leistungsschaltung (EP) bilden, daß die elektronische Logikschaltung (EL) die Steuerelektroden der Gleichrichter (I, II, III, IV, V) in solcher Weise ansteuert, daß ein Anhalten des Motors durch Beenden der Erregung der gesteuerten Steuerelektroden erfolgt, wodurch das aufeinanderfolgende natürliche Entregen der drei phasen verursacht wird, wobei die letzte phase, die entregt wird, diejenige ist, bei welcher mit geschlossenem Eisenspalt angehalten werden soll, und in solcher Weise, daß ein neues Anlaufen des Motors durch eine gleichzeitige Erregung der betreffenden Steuerelektroden erfolgt, zum Zeitpunkt einer Periode, in welchem an der Phase, bei welcher zuvor angehalten wurde, eine verschwindende Spannung angetroffen wird, die sich in gleichem Sinne wie bei der letzten Entregung ändert, und daß Informationen bezüglich der Anzahl von auszuführenden Schritten und des Drehsinnes der elektronischen Logikschaltung (EL) bei jeder neuen auszuführenden Verschiebung zugefuhrt werden.

FIG_1

FIG_2

FIG_3

FIG_4

FIG_5

EP 0 143 029 B1

FIG_6

FIG_7

FIG.8

FIG.9

FIG_10

FIG_11

FIG_12

5

FIG_13

FIG_14

## FIG_8A